(19) Europäisches Patentamt
European Patent Office
Office européen des brevets

(11) **EP 1 157 073 B1**

(12) **EUROPÄISCHE PATENTSCHRIFT**

(45) Veröffentlichungstag und Bekanntmachung des Hinweises auf die Patenterteilung:
**30.05.2007   Patentblatt 2007/22**

(51) Int Cl.:
*C09J 7/00* (2006.01)      *B29C 35/10* (2006.01)

(21) Anmeldenummer: **00906308.2**

(22) Anmeldetag: **10.02.2000**

(86) Internationale Anmeldenummer:
**PCT/EP2000/001060**

(87) Internationale Veröffentlichungsnummer:
**WO 2000/047684 (17.08.2000 Gazette 2000/33)**

(54) **VERFAHREN ZUR HERSTELLUNG EINER BESCHICHTUNG VON LÖSUNGSMITTELFREIEN HAFTKLEBESYSTEMEN AUF INSBESONDERE RELEASEBESCHICHTETEN SUBSTRATEN**

METHOD FOR PRODUCING A COATING OF SOLVENT-FREE ADHESIVE SYSTEMS ON ESPECIALLY RELEASE-COATED SUBSTRATES

PROCEDE DE REALISATION D'UN REVETEMENT AVEC DES SYSTEMES ADHESIFS DE CONTACT DEPOURVUS DE SOLVANTS, EN PARTICULIER SUR DES SUBSTRATS RECOUVERTS D'UNE COUCHE ANTI-ADHERENTE

(84) Benannte Vertragsstaaten:
**DE ES FR GB IT**

(30) Priorität: **12.02.1999   DE 19905934**

(43) Veröffentlichungstag der Anmeldung:
**28.11.2001   Patentblatt 2001/48**

(73) Patentinhaber: **tesa AG**
**20253 Hamburg (DE)**

(72) Erfinder:
• **GULDBRANDSEN, Lars**
  **D-22115 Hamburg (DE)**

• **HIRSCH, Ralf**
  **D-25451 Quickborn (DE)**
• **MÜLLER, Dieter**
  **D-27449 Kutenholz-Mulsum (DE)**
• **NEUHAUS-STEINMETZ, Hermann**
  **D-22926 Ahrensburg (DE)**
• **SCHULZ, Stefan**
  **D-22083 Hamburg (DE)**
• **SPEER, Jörg**
  **25563 Wrist (DE)**

(56) Entgegenhaltungen:
EP-A- 0 265 673         EP-A- 0 453 254
DE-A- 4 316 317         US-A- 4 571 351

EP 1 157 073 B1

**Beschreibung**

Die Erfindung beschäftigt sich mit einem Verfahren zur Herstellung einer Beschichtung von lösungsmittelfreien Haftklebesystemen auf insbesondere releasebeschichteten Substraten, wobei der Vorgang der Beschichtung über eine Walze läuft. Während sich das Haftklebesystem auf der Walze befindet, erfolgt eine Vernetzung des aufgelegten Klebstofffilms mit Hilfe von Elektronenstrahlen (ES), UV- oder IR-Strahlen.

Aus dem Stand der Technik ist bekannt, daß zur Erzielung hochscherfester Haftklebeschichten vorzugsweise Acrylathaftklebstoffe eingesetzt werden, die u.a. über physikalische Verfahren vernetzt werden. Bei ES- und UV-Strahlung werden die gewünschten Produkteigenschaften über die Strahlendosis eingestellt, bei IR-Strahlung über die Produkttemperatur und die Verweilzeit.

Nach den bisher bekannten Verfahren werden Haftklebeschichten u.a. mit Hilfe von Mehrwalzenauftragswerken, Mono-, Schlitz- oder Mehrkanaldüsen auf releasebeschichtete oder nicht releasebeschichtete Substrate direkt oder indirekt beschichtet und anschließend dem Vernetzungsvorgang ausgesetzt.

Für Produkte, die aus einer zu vernetzenden Beschichtung, welche zum Beispiel ein Haftkleber sein kann, und einem strahlendegradierbaren Träger bestehen, wie zum Beispiel Papier, Zellulosegewebe oder -vlies und PP-Folien, kann durch Optimierung der Beschleunigungsspannung die Schädigung minimiert werden. Hierbei erhält der Träger eine deutlich geringere mittlere Dosis als die Beschichtung, während der Dosisabfall in der Beschichtung noch in zulässigen Grenzen liegt.

Derartige Zusammenhänge sind u.a. in der EP 0 453 254 B (Yarosso u.a.) sowie in der Vortragsmitschrift eines von Dr. Karmann auf dem 7. Münchener Klebstoff- und Veredlungsseminar, 1982, gehaltenen Vortrags beschrieben.

Als Grundlage der Berechnung wird zum Beispiel folgende empirische Formel verwendet, die von Neuhaus-Steinmetz auf der RadTech Europe, Mediterraneo 1993, veröffentlicht worden ist.

$$D[\%] = \frac{\exp\left\{-\left(\frac{18,8 * X}{(U_B)^{1,57}} - 0,7\right)^2\right\}}{1 + \left(\frac{9,7 * X}{(U_B)^{1,57}}\right)^{15}}$$

mit

D    Dosis in %
UB   Beschleunigungsspannung in kV
X    durchstrahltes Flächengewicht in g/m$^2$, bestehend aus Flächengewicht des Vakuumfensters, Luftspalt zwischen Vakuumfenster und Produkt und Tiefe im Produkt

Ein doppelseitiges Klebeband, bestehend aus einem Träger mit den zu vernetzenden Klebmassen auf beiden Seiten und einem antiadhäsiv ausgerüsteten Releaseliner, darf bei einseitiger gleichmäßiger Durchstrahlung mit beschleunigten Elektronen nur eine Dosis von maximal ca. 20 bis 40 kGy erhalten, anderenfalls muß der Releaseliner wegen der unzulässigen Schädigung der mechanischen und antiadhäsiven Eigenschaften ausgetauscht werden. Die maximal zulässige absorbierte Strahlendosis ist vom Typ des Haftklebers und der Releasebeschichtungen abhängig.

Eine Minderung der unerwünschten Effekte ist auch hier bei geeigneten Schichtdicken durch eine geschickte Wahl der Beschleunigungsspannung zu erreichen, wenn die Strahlendosis im Releaseliner bereits deutlich abgefallen ist. Allerdings ist dabei zu beachten, daß die dem Releaseliner zugewandte Haftklebeschicht noch eine zur Vernetzung ausreichende Strahlendosis erhalten muß.

Bei der symmetrischen Bestrahlung beider Seiten eines doppelseitigen Klebebandes aus einem Träger mit Haftklebmassen auf beiden Seiten und einem antiadhäsiv ausgerüsteten Releaseliner erhält dieser die volle Strahlendosis. Das gilt auch für sogenannte Transfertapes, bei denen der zu vernetzende Haftkleber ohne weiteren Träger auf einen Releaseliner beschichtet wird.

Aus den obigen Ausführungen wird deutlich, daß der erforderliche Aufwand für die Vernetzung von doppelseitigen Klebebändern mit Elektronenstrahlen dann erheblich wird, wenn die zur Vernetzung der Haftklebeschicht benötigten Strahlendosen so hoch liegen, daß die mechanischen und antiadhäsiven Eigenschaften des Releaseliners unzulässig stark geschädigt werden, da dann der Releaseliner durch Umdecken gegen einen neuen unbelasteten ausgetauscht werden muß.

Die Vernetzung von Klebemassen auf temperaturempfindlichen Trägern, wie z. B. Weich-PVC oder PP-Spinnvliesen, erfordert die thermische Vernetzung im Kanal oder mit IR-Strahlern. Die UV-Vernetzung bei höheren Dosen erfordert einen erhöhten technologischen Aufwand oder geringere Fahrgeschwindigkeiten. Will man die Erhöhung der erzielbaren Kohäsivität der Klebstofffilme nicht über eine entsprechend hohe Strahlendosis erreichen, so kann man das hohe Molekulargewicht des Klebstoffs durch geeignete gemäß dem Stand der Technik ausgewählte Polymerisationsverfahren erzielen.

Solchermaßen hergestellte Acrylathaftklebstoffe weisen allerdings ein hohes Rückstellvermögen auf, was eine Beschichtung mit Hilfe von Standardbeschichtungsverfahren wie Mehrwalzenauftrag oder Düsenbeschichtung erschwert.

In der WO 97/15722 wird ein Verfahren beschrieben, mit dessen Hilfe man ein Relaxieren des Klebstofffilms unmittelbar nach Austreten aus einer Monodüse oder Mehrkanaldüse erreicht. Der Nachteil dieses Verfahrens besteht darin, daß der freie Weg, den ein aus der Düse austretender Klebstofffilm benötigt, um zu relaxieren, mit steigendem Molekulargewicht zunimmt. Dies hat wiederum zur Folge, dass der Klebstofffilm sich von der ursprünglich durch die Austrittsbreite der Düsen vorgegebenen Filmbreite sich mehr oder weniger stark zusammenzieht (neck in). Die Folge ist, dass zur Erzielung erforderlicher Klebstofffilmbeschichtungsbreiten Düsenbreiten erforderlich sind, die um einiges breiter gestaltet werden müssen als es bei der vorliegenden Erfindung der Fall ist, da hier geringere Molekulargewichte durch höhere Strahlendosen ausgeglichen werden können.

Aufgabe der vorliegenden Erfindung ist es, ein Verfahren zur Herstellung einer lösemittelfreien Haftklebebeschichtung auf insbesondere releasebeschichteten Substraten zur Verfügung zu stellen, das die Nachteile des Standes der Technik vermeidet und das eine kostengünstige Fertigung erlaubt und das den Einsatz von strahlenchemischer Vernetzung insbesondere mit beschleunigten Elektronen oder UV-Strahlung ermöglicht, ohne dass dabei eine Schädigung des Trägers sowie des Releaseliners hingenommen werden muß.

Gelöst wird diese Aufgabe durch ein Verfahren, wie es im Hauptanspruch niedergelegt ist. Vorteilhafte Ausführungsformen des Verfahrens sind Gegenstand der Unteransprüche.

Demgemäß beschreibt die Erfindung ein Verfahren zur Herstellung einer Beschichtung von lösungsmittelfreien Haftklebesystemen auf insbesondere releasebeschichtete Substrate, wobei

auf eine rotierende Walze das Haftklebesystem in einer oder mehreren Lagen mittels eines Klebstoffauftragswerks aufgebracht wird,

das auf der Walze befindliche Haftklebesystem in einer Bestrahlungsvorrichtung durch energiereiche Strahlung, und zwar mit Hilfe von Elektronenstrahlen (ES), UV- oder IR-Strahlen, vernetzt wird und

an die Walze das Substrat herangeführt wird, so dass das Haftklebesystem von der Walze auf das Substrat transferiert wird und gegebenenfalls aufgerollt wird.

Bevor das Haftklebesystem auf die rotierende Walze aufgetragen wird, wird ein Fluidfilm mittels eines Fluidauftragswerks auf die Walze gebracht, so dass sich der Fluidfilm zwischen Walze und Haftklebesystem befindet.

Typische Bestrahlungsvorrichtungen, die bei der erfindungsgemäßen Ausgestaltung des Verfahrens zum Einsatz kommen, stellen Linearkathodensysteme, Scannersysteme beziehungsweise Multilängskathodensysteme dar, sofern es sich um Elektronenstrahlbeschleuniger handelt.

Die Beschleunigungsspannungen liegen im Bereich zwischen 40 kV und 350 kV, vorzugsweise 80 kV bis 300 kV. Die Dosisleistungen bewegen zwischen 5 bis 150 kGy, insbesondere 20 bis 90 kGy.

Als UV-Vernetzungsanlagen können insbesondere zwei Quecksilbermitteldruckstrahler mit jeweils einer Leistung von 120 W/cm beziehungsweise ein Quecksilbermitteldruckstrahler mit einer Leistung von 240 W/cm zum Einsatz kommen. Als Dosen werden bevorzugt 10 bis 300 mJ/cm$^2$ eingestellt.

Das Heranführen des Substrats geschieht insbesondere über eine zweite Walze. Als Substrate finden Papiere, Folien, Non-Wovens und releasebeschichtete Materialien wie Trennpapiere, Folien und dergleichen Verwendung.

Die zweite Walze, auch als Anlegewalze bezeichnet, ist vorzugsweise mit einem Gummiüberzug versehen und wird vorzugsweise mit einem Liniendruck von 50 bis 500 N/mm, insbesondere mit 100 bis 200 N/mm an die Walze angepreßt. Die Anlegewalze hat vorzugsweise eine Shore-Härte (A) von 40 -100, insbesondere eine Shore-Härte von 60 - 80 shore (A).

Das Substrat wird bevorzugt so an die Walze angeführt, daß die Geschwindigkeit der Walzenoberfläche mit der des Substrats übereinstimmt. Sollte jedoch mit der Abnahme des Klebstofffilms eine Dickenverringerung angestrebt werden, kann das Substrat auch eine höhere Geschwindigkeit aufweisen.

In einer ersten vorteilhaften Ausführungsform ist die Walze eine Stahlwalze, eine verchromte Stahlwalze, eine Gummiwalze oder eine Silikongummiwalze ist und/oder ist die Walze aus elastischem Material gefertigt. Des weiteren kann die Walze glatt oder eine gering strukturierte Oberfläche aufweisen.

Die Glattwalze kann vorzugsweise eine Chromschicht aufweisen. Optional kann die verchromte Stahlwalze eine hochglanzpolierte Oberfläche besitzen mit einer Rauhtiefe $R_z$ < +/- 1 $\mu$m.

Die Beschichtungswalze kann aber auch gummiert sein, vorzugsweise mit einer Gummihärte von 40 bis 100 shore (A), insbesondere mit einer Härte von 60 - 80 shore (A). Der Walzenbezug kann gemäß dem Stand der Technik aus EPDM, Viton oder Silikongummi oder anderen elastischen Materialien bestehen.

Weiterhin als vorteilhaft hat sich erwiesen, wenn die Walze temperierbar ist, und zwar bevorzugt in einem Bereich von -10 °C bis 200 °C, ganz besonders bevorzugt von 2 °C bis 50 °C.

Das Auflegen des Haftklebesystems auf die Walze erfolgt insbesondere mit Hilfe einer Mono- oder Mehrkanaldüse oder einer Schlitzdüse.

Der Fluidfilm ist vorzugsweise Wasser und/ oder destilliertes Wasser, gegebenenfalls mit Zusätzen wie Alkohol, Benetzungsmitteln und/oder klebstoffrezepturunempfindliche Agenzien wie Weichmachern oder flüssigen Alterungsschutzmitteln

Zur Erreichung einer gleichmäßigen Benetzung sollte die Oberflächenspannung des Fluides kleiner sein als die Oberflächenspannung der zu benetzenden Walze.

Die mit Fluid beaufschlagte Walze wird mit dem aus der Düse austretenden Klebstofffilm vorzugsweise berührungsfrei beschichtet. Der Abstand der Düse zur Walze kann vorzugsweise 0 bis 60 mm betragen, insbesondere 1 bis 10 mm.

Das Fluidauftragswerk sollte des weiteren noch temperierbar sein, um in der Klebstoffrezeptur enthaltene, unempfindliche Agenzien auf Temperaturen mit gewünschten Fluideigenschaften zu bringen.

Das Fluid kann dabei angewischt oder angetragen werden, es ist aber auch möglich, dass das Fluid berührungslos auf die Walze gebracht wird, zum Beispiel durch Aufsprühen.

In einer weiteren vorteilhaften Ausführungsform der Erfindung erfolgt eine Unterstützung der strahlenchemischen Vernetzung durch eine thermische Vernetzung, die über die Walzentemperatur der beschichteten Walze regulierbar ist.

Als Haftklebesystem werden insbesondere eingesetzt Acrylat-, Naturkautschuk-, Synthesekautschukoder EVA-Kleber.

Beispielsweise kommen als niedermolekulare Acrylathotmelts Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern zum Einsatz.

Die Acrylathotmelts können des weiteren mit einem oder mehreren Additiven wie Alterungsschutzmitteln, Vernetzern, Lichtschutzmitteln, Ozonschutzmitteln, Fettsäuren, Harzen, Weichmachern und Beschleunigern abgemischt sein.

Weiterhin können sie mit einem oder mehreren Füllstoffen wie Fasern, Ruß, Zinkoxid, Mikrovollkugeln, Kieselsäure, Silikaten und Kreide gefüllt sein, wobei auch der Zusatz von blockierungsfreien Isocyanaten möglich ist.

Bei Kautschuk/Synthesekautschuk als Ausgangsmaterial für den Kleber sind weite Variationsmöglichkeiten gegeben, sei er aus der Gruppe der Naturkautschuke oder der Synthesekautschuke oder sei er aus einem beliebigen Blend aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.

Stellvertretend genannt seien an dieser Stelle vor allem die besonders verträglichen Styrol-Isopren-Styrol- (SIS) und Styrol-Butadien-Styrol (SBS) -Typen.

Als zuzusetzende klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Als ebenfalls zuzusetzende Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Strahlungssensitive und wärmeempfindliche Trägermaterialien kommen gemäß der vorliegenden Erfindung dabei mit den Strahlungsquellen nicht in Berührung.

Auf eine Relaxierung des Klebstofffilms kann ebenfalls verzichtet werden, da der Klebstofffilm unmittelbar nach Austritt aus der Düse in seinem Zustand durch die Vernetzung auf der Walze stabilisiert wird. Es sind durch die vorliegende Erfindung deutlich höhere Strahlungsdosen möglich, um die Kohäsivität von Haftschmelzklebstoffen auf das gewünschte Maß anzuheben.

Die Vorzüge der vorliegenden Erfindung liegen darin begründet, daß keinerlei Schädigung der eingesetzten Substrate und Releaseliner durch physikalische Vernetzungsmethoden auftreten und auch daß hochmolekulare Klebstoffschichten durch direkte Bestrahlung auf der Walze kein oder ausreichend geringes Relaxationsverhalten zeigen.

Im folgenden soll anhand einer Figur sowie mehrerer Beispiele die Erfindung näher dargelegt werden, ohne damit diese aber unnötig einschränken zu wollen.

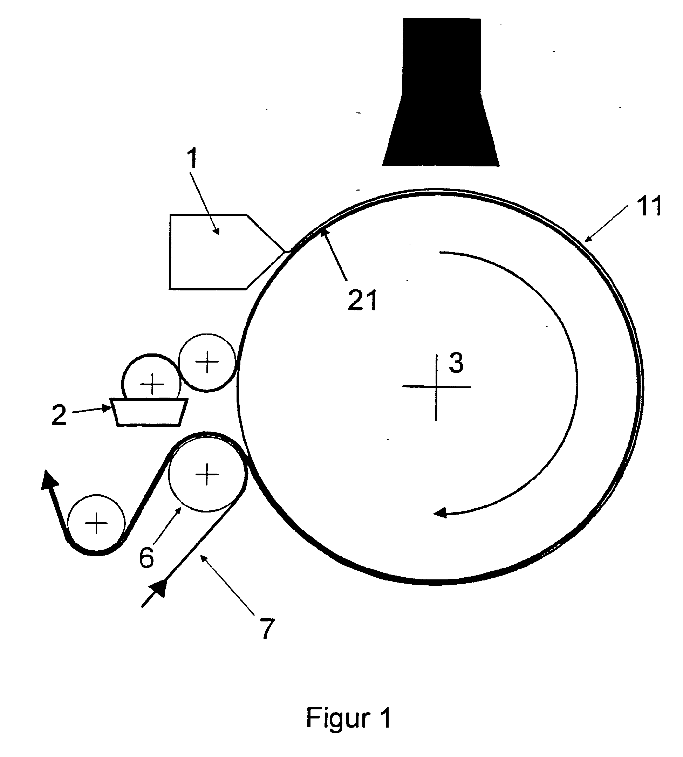

In der Figur 1 ist eine vorteilhafte Ausführungsform des Verfahrens gezeigt.

Die Düse (1) beschichtet den Haftschmelzklebstoff (11) auf eine Walze (3), die als Glattwalze oder eine strukturierte Walze ausgeführt sein kann. Neben dem Einsatz der hier gezeigten Monodüse (1) können auch Schlitzdüsen oder Mehrkanaldüsen mit zum Beispiel drei oder mehreren Einzelschichten eingesetzt werden.

Die Walze (3) ist als verchromte Stahlwalze mit einer hochglanzpolierten Oberfläche ausgeführt, und zwar mit einer Rauhtiefe $R_z$ < +/- 1 $\mu$m.

Der Fluidfilm (21) wird vorzugsweise über ein gemäß dem Stand der Technik ausgeführtes Walzenauftragswerk (2) gleichmäßig über die Beschichtungsbreite an die Walze (3) vordosiert angetragen. Die mit Fluid (21) beaufschlagte Walze (3) wird mit dem aus der Düse (1) austretenden Klebstoffilm (11) vorzugsweise berührungsfrei beschichtet. Der Abstand der Düse (1) zur Walze (3) beträgt 5 mm.

Der auf die Walze (3) schwimmend aufgelegte Klebstoffilm (11) wird unmittelbar auf der Walze (3) mittels einer Strahlungsvorrichtung (8) ES-vernetzt. Die Wahl der Vemetzungstechnologie hängt vom zu vernetzenden Klebstoffsystem ab.

Anschließend wird der Klebstoffilm (11) mit Hilfe einer Anlegewalze (6) von der Walze (3) abgenommen. Die Anlegewalze (6) ist mit einem Gummiüberzug versehen und wird mit einem Liniendruck von 150 N/mm mit an die Walze (3) angepreßt.

Als den Haftklebstoffilm abnehmendes Substrat (7) wird ein releaseaufweisendes Trennpapier der Anlegewalze zugeführt und der Klebstoffilm (11) somit auf das Substrat (7) übertragen.

Zum besseren Verständnis der vorliegenden Erfindung dienen nachstehende Beispiele.

### Beispiel 1

Mit Hilfe eines Eirischneckenextruders (UD:27) wurde ein Acrylathaftschmelzklebstoff, wie in der DE 39 42 232 oder der DE 43 13 008 beschrieben, bei einer Temperatur von 90° C mit Hilfe einer Monoextrusionsdüse (Fabrikat Breyer), Arbeitsbreite 350 mm, auf eine Glattwalze berührungsfrei beschichtet. Das Fluid, welches die Glattwalze benetzte, war Wasser. Die Temperatur der Glattwalze betrug 10° C. Der Abstand der Düse zur Walze betrug 2 mm.

Es wurde ein Klebstoffilm mit einer Dicke von 50 $\mu$m auf die Glattwalze gelegt und unmittelbar auf der Glattwalze bei einer Beschleunigungsspannung von 180 kV und einer Einstelldosis von 80 kGy vernetzt. Anschließend erfolgte die Transferierung über die bahnführende Anlegewalze auf eine 12 $\mu$m coronavorbehandelte PET-Folie. Die offene Klebstoffseite wurde anschließend mit einem doppelseitigen Trennpapier abgedeckt. In einem zweiten Arbeitsgang wurde die freie PET-Folienseite ebenfalls mit gemäß der Erfindung beschichteten und vernetzten Klebmasseschicht über die Anlegewalze transferiert.

### Beispiel 2

Der im Beispiel 1 erwähnte Acrylathaftschmelzklebstoff wurde unter den in Beispiel 1 genannten Bedingungen in einer Schichtdicke von 95 $\mu$m auf die mit Wasser benetzte Glattwalze berührungsfrei beschichtet und unmittelbar auf der Glattwalze mit einer Beschleunigungsspannung von 230 kV und einer Einstelldosis von 80 kGy ES-vernetzt. Anschließend erfolgte die Transferierung des vernetzten Klebstoffs auf eine 40 $\mu$m dicke PVC-Folie. Die offene Klebstoffseite wurde mit einem doppelseitigen Trennpapier abgedeckt. Der gleiche Klebstoff wurde gemäß der Erfindung unter gleichen Bedingungen vernetzt und anschließend auf die freie PVC-Seite transferiert und das so hergestellte doppelseitige Klebeband aufgerollt.

### Patentansprüche

1. Verfahren zur Herstellung einer Beschichtung von lösungsmittelfreien Haftklebesystemen auf insbesondere releasebeschichtete Substrate, wobei auf eine rotierende Walze das Haftklebesystem in einer oder mehreren Lagen mittels eines Klebstoffauftragswerks aufgebracht wird, das auf der Walze befindliche Haftklebesystem in einer Bestrahlungsvorrichtung durch energiereiche Strahlung vernetzt wird und an die Walze das Substrat herangeführt wird, so dass das Haftklebesystem von der Walze auf das Substrat transferiert wird, wobei bevor das Haftklebesystem auf die rotierende Walze aufgetragen wird, ein Fluidfilm mittels eines Fluidauftragswerks auf die Walze gebracht wird, so dass sich der Fluidfilm zwischen Walze und Haftklebesystem befindet.

2. Verfahren nach Anspruch 1, **dadurch gekennzeichnet, dass** die Walze eine Stahlwalze, eine verchromte Stahlwalze, eine Gummiwalze oder eine Silikongummiwalze ist und/oder dass die Walze aus elastischem Material gefertigt ist.

3. Verfahren nach Anspruch 1, **dadurch gekennzeichnet, dass** die Walze temperierbar ist bevorzugt in einem Bereich von -10 °C bis 200 °C, ganz besonders bevorzugt von 2 °C bis 50 °C.

4. Verfahren nach Anspruch 1, **dadurch gekennzeichnet, dass** das Auflegen des Haftklebesystems auf die Walze mit Hilfe einer Mono- oder Mehrkanaldüse oder einer Schlitzdüse erfolgt.

5. Verfahren nach Anspruch 1, **dadurch gekennzeichnet, dass** das Fluidauftragswerk temperierbar ist.

6. Verfahren nach Anspruch 1, **dadurch gekennzeichnet, dass** als Haftklebesystem eingesetzt werden Acrylat-, Naturkautschuk-, Synthesekautschukoder EVA-Kleber.

7. Verfahren nach Anspruch 1, **dadurch gekennzeichnet, dass** der Fluidfilm gebildet wird von Wasser und/oder destilliertem Wasser, gegebenenfalls mit Zusätzen wie Alkohol, Benetzungsmitteln und/oder klebstoffrezepturunempfindliche Agenzien wie Weichmachern oder flüssigen Alterungsschutzmitteln.

## Claims

1. Method of producing a coating of solvent-free pressure-sensitive adhesive systems on substrates, especially release-coated substrates, in which
   the pressure-sensitive adhesive system is applied in one or more layers to a rotating roller by means of an adhesive applicator,
   the pressure-sensitive adhesive system on the roller is crosslinked in an irradiating means by means of high-energy radiation, and
   the roller is contacted with the substrate, so that the pressure-sensitive adhesive system is transferred from the roller to the substrate,
   it being the case that, before the pressure-sensitive adhesive system is applied to the rotating roller, a fluid film is applied to the roller by means of a fluid applicator unit, so that the fluid film is located between the roller and the pressure-sensitive adhesive system.

2. Method according to claim 1, **characterized in that** the roller is a steel roller, a chrome-plate steel roller, a rubber roller or a silicone rubber roller and/or **in that** the roller is manufactured from elastic material.

3. Method according to claim 1, **characterized in that** the roller is temperature-controllable preferably in a range from -10°C to 200°C, with very particular preference from 2°C to 50°C.

4. Method according to claim 1, **characterized in that** the placement of the pressure-sensitive adhesive system onto the roller takes place with the aid of a single-manifold or multi-manifold die or of a slot die.

5. Method according to claim 1, **characterized in that** the fluid applicator unit is temperature-controllable.

6. Method according to claim 1, **characterized in that** acrylic, natural rubber, synthetic rubber or EVA adhesives are used as the pressure-sensitive adhesive system.

7. Method according to claim 1, **characterized in that** the fluid film comprises water and/or distilled water, with or without additions such as alcohol, wetting agents and/or agents insensitive to the adhesive formulation, such as plasticizers or liquid aging inhibitors.

## Revendications

1. Procédé de préparation d'un revêtement avec des systèmes adhésifs de contact dépourvus de solvants, en particulier sur des substrats munis d'une couche antiadhésive, dans lequel on applique, sur un rouleau tournant, le système d'adhésif de contact en une ou plusieurs couches, au moyen d'un système applicateur d'adhésif, on réticule le système d'adhésif de contact se trouvant sur le rouleau dans un dispositif d'irradiation par un rayonnement à haute énergie, et on amène le substrat au rouleau, de manière à ce que le système d'adhésif de contact soit transféré du rouleau sur le substrat, et dans lequel, avant l'application du système d'adhésif de contact sur le rouleau tournant, on applique sur le rouleau un film de fluide au moyen d'un système applicateur de fluide, de manière à ce que le film de fluide se trouve entre le rouleau et le système d'adhésif de contact.

2. Procédé suivant la revendication 1, **caractérisé en ce que** le rouleau est un rouleau en acier, un rouleau en acier chromé, un rouleau en caoutchouc ou un rouleau de caoutchouc siliconé et / ou **en ce que** le rouleau est fabriqué en un matériau élastique.

3. Procédé suivant la revendication 1, **caractérisé en ce que** le rouleau possède une régulation de température, de préférence dans une plage de -10°C à 200°C, le plus préférablement de 2°C à 50°C.

4. Procédé suivant la revendication 1, **caractérisé en ce que** l'application du système d'adhésif de contact sur le rouleau se fait à l'aide d'une filière à un ou plusieurs canaux ou d'une filière plate.

5. Procédé suivant la revendication 1, **caractérisé en ce que** le système applicateur de fluide dispose d'une régulation de température.

6. Procédé suivant la revendication 1, **caractérisé en ce que** l'on met en oeuvre en tant que système d'adhésif de contact des adhésifs d'acrylate, de caoutchouc naturel, de caoutchouc de synthèse ou d'EVA.

7. Procédé suivant la revendication 1, **caractérisé en ce que** le film de fluide est formé d'eau et / ou d'eau distillée, le cas échéant avec des additifs tels qu'un alcool, des agents mouillants et / ou des agents insensibles à la formulation de l'adhésif, comme des plastifiants ou des agents liquides de protection contre le vieillissement.

Figur 1